# EUROPEAN PATENT APPLICATION

(11) **EP 2 980 906 A1**
(43) Date of publication of application: **03.02.2016**
(21) Application number: 14306218.0
(22) Date of filing: 31.07.2014
(51) Int. Cl.: H01M 10/052, H01M 10/0568, H01M 10/0569, H01M 6/16, H01M 10/054

(54) **Fluorinated carbamates as solvent for lithium-ion electrolytes**

(71) Applicant: Westfälische Wilhelms-Universität Münster, 48149 Münster (DE); Institut Polytechnique de Grenoble, 38031 Grenoble Cedex (FR)
(72) Inventor: Bresser, Dominic, 89073 Ulm (DE); Kalhoff, Julian, 48149 Münster (DE); Passerini, Stefano, 48149 Münster (DE); Sanchez, Jean-Yves, 38330 Saint-Ismier (FR); Alloin, Fannie, 38220 Vizille (FR); Bolloli, Marco, 38100 Grenoble (FR)
(74) Representative: Michalski Hüttermann & Partner Patentanwälte mbB

(57) **Abstract**

The present invention relates to an electrolyte solution comprising an electrolyte salt and an electrolyte solvent,

wherein the electrolyte solvent comprises a fluorinated carbamate according to the general formula (1) R¹R²NC(O)OCR³R⁴R⁵ in an amount in the range from ≥ 80 wt% to ≤ 100 wt%, referring to a total amount of the electrolyte solvent of 100 wt%,

and to a method for preventing aluminum current collector corrosion in alkali or alkaline earth metal-based or an Al-based or Zn-based electrochemical energy storage devices by using said electrolyte solution.

## Description

The present invention relates to an electrolyte solution for use in lithium-ion batteries and particularly to an electrolyte solvent for use with sulfonimides and other electrolyte salts suffering aluminum current collector corrosion.

Lithium-ion batteries are nowadays the leading battery technology, since they offer efficient and high energy storage as well as high power density, and thus dominate the market for batteries used in portable electronic devices. However, one of the major safety issues of lithium-ion battery technology is related to the use of LiPF₆ as lithium salt in currently commercially available batteries. LiPF₆ is thermally unstable, resulting in the formation of gaseous PF₅ that is a strong Lewis acid. LiPF₆ hydrolysis moreover results in the formation of HF, which is not only highly toxic, but furthermore has a deleterious effect on the electrolyte solvent as well as the electrodes active materials. A major advantage of LiPF₆ relative to other lithium salts, besides a well-balanced combination of chemical and electrochemical properties, however, is an initial surface passivation of the aluminum current collector, which is commonly used for lithium-ion cathodes as well as high voltage lithium-ion anodes as, for instance, Li₄Ti₅O₁₂.

Lithium bis(trifluoromethanesulfonyl)imide (LiTFSI) provides a promising alternative as conducting salt since it provides a high ionic conductivity and a significantly improved thermal, chemical and electrochemical stability relatively to LiPF₆. However, LiTFSI severely suffers anodic dissolution, i.e., "corrosion", of the aluminum current collector. This corrosion results in a rapid fading of the lithium cell upon cycling, thus, preventing the use of the electrochemically, chemically, and thermally more stable LiTFSI rather than the toxic, unstable, and hazardous LiPF₆ as conducting salt. UD 40640 / SAM:AL

Document US 6159640 discloses electrolyte systems for lithium batteries of increased safety comprising partially fluorinated carbamates of the formula R¹R²NC(O)OCR³ that show beneficial effects as solvent basically related to an increasing boiling and flash point. These effects relate to the whole class of the partially fluorinated carbamates.

The object underlying the present invention was to provide compounds usable for the suppression or prevention of the aluminum current collector corrosion resulting from the use of LiTFSI as lithium salt in electrolytes.

The problem is solved by an electrolyte solution comprising an electrolyte salt and an electrolyte solvent, wherein the electrolyte solvent comprises at least one fluorinated carbamate according to the general formula (1) R¹R²NC(O)OCR³R⁴R⁵ wherein:
- R¹, R²: are selected, the same or independently of the other, from the group comprising H, linear C₁-C₄-alkyl, branched C₃-C₄-alkyl and/or C₃-C₇-cycloalkyl, with the provision that when one of
- R¹ or R²: is C₃-C₇-cycloalkyl the other is H or a C₁-C₂ alkyl group, wherein said alkyl or cycloalkyl groups are optionally substituted by at least one fluorine atom, or
- R¹ and R²: directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
- R³: is selected from the group comprising H, F, CN, perfluorinated linear C₁-C₄-alkyl and/or perfluorinated branched C₃-C₄-alkyl;
- R⁴, R⁵: are selected, the same or independently of the other, from the group comprising perfluorinated linear C₁-C₄-alkyl and/or perfluorinated branched C₃-C₄-alkyl, and
wherein the electrolyte solvent comprises the fluorinated carbamate in an amount in the range from ≥ 80 wt% to ≤ 100 wt%, referring to a total amount of the electrolyte solvent of 100 wt%, and wherein the electrolyte salt is selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts.

Surprisingly, it was found that the fluorinated carbamates R¹R²NC(O)OCR³R⁴R⁵ according to the general formula (1) markedly supress or prevent aluminum current collector corrosion. Advantageously, even after 100 potentiodynamic cyclic sweeps using LiTFSI as the electrolyte salt and 1,1,1,3,3,3-hexafluoropropan-2-yl dimethylcarbamate or 1,1,1,3,3,3-hexafluoropropan-2-yl diethylcarbamate as the electrolyte solvent no aluminum corrosion was observed on the aluminum foil current collector. The prevention of aluminum current collector corrosion improves the safety of lithium-ion batteries, particularly with respect to large scale applications such as electric vehicles or stationary energy storage.

The beneficial effect of passivating the aluminum current collector and, thus, a stable cycling performance was, however, surprisingly only observed for fluorinated carbamates wherein the substituents R⁴ and R⁵ both are perfluorinated alkyl groups. Lesser fluorinated carbamates such as N,N-dimethyl trifluoroethyl carbamate wherein only one of R⁴ and R⁵ is a trifluoromethyl group and the other is hydrogen, did not show this beneficial effect, resulting in a rapidly fading electrochemical performance.

The corresponding chemical formula of the fluorinated carbamate R¹R²NC(O)OCR³R⁴R⁵ is given below:

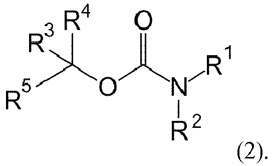

The term "perfluorinated" alkyl group as used herein refers to alkyl groups wherein all carbon-bound hydrogen atoms are substituted by fluorine.

The term "alkyl" according to the invention is to be understood as including straight-chain or linear and branched alkyl groups, if not defined otherwise. The term "C₁-C₄-alkyl" as used herein refers to straight-chain or branched alkyl groups having 1 to 4 carbon atoms.

The term "branched C₃-C₄-alkyl" as used herein refers to branched alkyl groups having 3 to 4 carbon atoms. A branched C₃-C₄-alkyl group may be selected from the group comprising isopropyl, isobutyl (2-methylpropyl), sec-butyl (1-methylpropyl) and/or tert-butyl (1,1-dimethylethyl). Linear or straight-chain C₁-C₄-alkyl groups may be selected from the group comprising methyl, ethyl, n-propyl and/or n-butyl.

The term "C₃-C₇-cycloalkyl" as used herein refers to the group comprising cyclopropyl, cyclobutyl, cyclopentyl, cyclohexyl and/or cycloheptyl.

Embodiments wherein the substituents R¹ and R² are directly linked to form together with the nitrogen atom to which they are attached a 3- to 7-membered non aromatic heterocycle may refer to substituents selected from the group comprising aziridinyl, azetidinyl, pyrrolidinyl, piperidinyl and/or azepanyl. Embodiments wherein the substituents R¹ and R² are linked via one or more additional nitrogen and/or oxygen atoms to form together with the nitrogen atom to which they are attached a 3-to 7-membered non aromatic heterocycle may refer to substituents selected from the group comprising oxaziridinyl, diaziridinyl, 1,3-oxazetidinyl, 1,3-diazetidinyl, oxazolidinyl, diazolidinyl, morpholinyl (tetrahydro-1,4-oxazinyl) and/or tetrahydro-1,4-diazinyl.

The substituents R¹ and R² may be linked together to form a 3- to 7-membered non aromatic heterocyclic ring, or may be selected from linear C₁-C₄-alkyl, branched C₃-C₄-alkyl or cycloalkyl rings. The provision that when one of R¹ or R² is C₃-C₇-cycloalkyl the other is hydrogen or a C₁-C₂ alkyl group provides a sufficient viscosity of the compound. The alkyl or cycloalkyl groups of R¹ and R² are optionally substituted by one or more fluorine atoms. It has been found that for effectively preventing aluminum current collector corrosion, however, at least the substituents R⁴ and R⁵ should be a perfluorinated linear C₁-C₄- or branched C₃-C₄-alkyl group.

The substituent R³ may be selected from the group comprising H, F, CN, and perfluorinated methyl, ethyl, n-propyl, n-butyl, isopropyl, isobutyl, sec-butyl and/or tert-butyl. The substituent R³ may particularly be selected from H, F, and perfluorinated methyl, ethyl, propyl or isopropyl. In preferred embodiments, R³ is selected from the group comprising H, F and/or perfluorinated linear C₁-C₃-alkyl. Preferably R³ is selected from the group comprising H, F, CF₃ and/or C₂F₅. R³ particularly may be hydrogen. Anodic aluminium dissolution was prevented using carbamates wherein R³ was hydrogen. The substituent R³ being hydrogen further provides the benefit of cost efficiency as fluorination generally increases the production costs.

The substituents R⁴ and R⁵ may be identical or different from each other selected from the group comprising perfluorinated methyl, ethyl, n-propyl or n-butyl, or isopropyl, isobutyl, sec-butyl and/or tert-butyl. The substituents R⁴ and R⁵ particularly may be identical or different from each other selected from perfluorinated methyl, ethyl, propyl or isopropyl. In preferred embodiments, R⁴ and R⁵ are the same or independently of the other perfluorinated linear C₁-C₃-alkyl, preferably selected from the group comprising CF₃ and/or C₂F₅. Good results in the prevention of anodic aluminum dissolution and prevention of corrosion of aluminum current collectors were observed in LiTFSI-containing electrolytes using carbamates with R⁴ and R⁵ being CF₃ or C₂F₅.

The substituents R¹ and R² may be identical or different from each other selected from linear C₁-C₄-alkyl or branched C₃-C₄-alkyl. One or more hydrogen atom of the alkyl groups may be substituted by a fluorine atom. The alkyl groups alternatively may not be substituted by fluorine atoms, and thus reduce production costs. In preferred embodiments, R¹ and R² are selected, the same or independently of the other, from the group comprising linear or branched C₁-C₃-alkyl, preferably selected from the group comprising methyl and/or ethyl. Small and particularly not fluorinated substituents R¹ and R² provide advantages in view of cost efficient carbamates, solubility of the electrolyte salt, and low viscosity of the electrolyte solvent.

In an embodiment, the fluorinated carbamate is selected from the group comprising 1,1,1,3,3,3-hexafluoropropan-2-yl dimethylcarbamate, 1,1,1,3,3,3-hexafluoropropan-2-yl diethylcarbamate and mixtures thereof. 1,1,1,3,3,3-hexafluoropropan-2-yl dimethylcarbamate is also denoted N,N,dimethyl-hexafluoropropylcarbamate (F-C2). 1,1,1,3,3,3-hexafluoropropan-2-yl diethylcarbamate is also denoted N,N,diethyl-hexafluoropropylcarbamate (F-C4).

The corresponding chemical formulas of 1,1,1,3,3,3-hexafluoropropan-2-yl dimethylcarbamate or N,N,dimethyl-hexafluoropropylcarbamate (F-C2) and 1,1,1,3,3,3-hexafluoropropan-2-yl diethylcarbamate (F-C4), respectively, are given below:

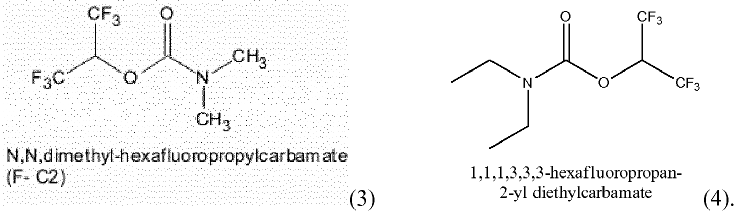

It could be shown that particularly a use of 1,1,1,3,3,3-hexafluoropropan-2-yl dimethylcarbamate (F-C2) and 1,1,1,3,3,3-hexafluoropropan-2-yl diethylcarbamate (F-C4) as electrolyte solvent for electrolytes containing LiTFSI as the electrolyte salt resulted in the prevention of anodic aluminum dissolution and no corrosion was observed for the aluminum foil used as current collector, even after 100 potentiodynamic cyclic sweeps.

The electrolyte solution comprises at least one fluorinated carbamate according to the general formula (1). In embodiments, the electrolyte solution may comprise a mixture of fluorinated carbamates.

The fluorinated carbamate according to the general formula (1) is usable for the prevention of aluminum current collector corrosion in an alkali or alkaline earth metal-based electrochemical energy storage device containing sulfonimides or other electrolyte salts suffering aluminum current collector corrosion. The fluorinated carbamate may be the sole electrolyte solvent used in an electrolyte solution. A determination of the amount of fluorinated carbamate necessary for a clear improvement in the passivation of an aluminum current collector showed that an amount of ≥ 80 wt.-% of fluorinated carbamate such as 1,1,1,3,3,3-hexafluoropropan-2-yl dimethylcarbamate (F-C2) or 1,1,1,3,3,3-hexafluoropropan-2-yl diethylcarbamate (F-C4) in standard non-fluorinated carbonates significantly reduced the aluminum current collector corrosion. Referring to non-fluorinated carbonate solvents, aluminum passivation within the first 10 cycles by using 80 wt% of F-C2 or F-C4 could be achieved, while amounts of 33 wt% or 50 wt%, referring to the total weight of the electrolyte solvent, in standard non-fluorinated carbonates did not sufficiently suppress aluminum current collector corrosion. In embodiments, the electrolyte solution comprises the fluorinated carbamate in a range from ≥ 85 wt% to ≤ 100 wt%, preferably in a range of ≥ 90 wt% to ≤ 100 wt%, more preferably in a range of ≥ 95 wt% to ≤ 100 wt%, referring to a total amount of the electrolyte solvent of 100 wt%. If not indicated otherwise, the ratios of electrolyte solvents or compounds as given refer to a respective weight ratio. Weight percent, abbreviated wt% or wt.-% are synonyms that refer to the concentration of a compound as the weight of the compound divided by the weight of the composition and multiplied by 100. The total amount of all solvents of the electrolyte solution does not exceed 100 wt%.

The fluorinated carbamates are usable for the inhibition of aluminum current collector corrosion together with electrolyte solvents such as carbonates, esters, lactones or nitriles, in particular with non-fluorinated organic carbonates. This is of particular benefit as non-fluorinated organic carbonates are used as standard solvents in commercial lithium-ion batteries. In embodiments, the electrolyte solution comprises at least one non-fluorinated organic carbonate selected from the group comprising ethylene carbonate, ethyl methyl carbonate, propylene carbonate, dimethyl carbonate, diethyl carbonate, and mixtures thereof. A preferred mixture of carbonate solvents is a carbonate solvent mixture of ethylene carbonate (EC) and dimethylcarbonate (DMC), for example in a weight ratio of 1:1.

The electrolyte solvent is advantageously usable with sulfonimides and other electrolyte salts suffering aluminum current collector corrosion. Such salts preferably are selected from the group comprising alkali or alkaline earth metal, Al or Zn sulfonimide, methide, sulfonate and oxalatoborate salts. Further preferred salts may be selected from the group comprising alkali or alkaline earth metal, Al or Zn salts of CF₃- and CN-substituted Hückel-anions, of secondary carbanions substituted with (CF₃SO₂)₂CH⁻, of tertiary carbanions substituted with (CF₃SO₂)₃C⁻-, (N≡C)₃C⁻- or (FSO₂)₃C⁻-, pentacyano cyclopentadienyl, arylsulfonyl, trifluoromethane sulfonyl amide anions, SO₃⁻-end-capped polyethylene glycol, or sulfonamide end-capped polyethylene glycol, and mixtures of these salts. The alkali or alkaline earth metal salt preferably is selected from lithium, sodium, potassium, magnesium, or calcium salts. The electrolyte salt particularly is a lithium salt.

In a preferred embodiment, the alkali or alkaline earth metal sulfonimide or sulfonate salt is a lithium salt selected from the group comprising lithium bis(trifluoromethanesulfonyl)imide LiN(SO₂CF₃)₂ (LiTFSI), lithium bis(fluorosulfonyl)imide LiN(FSO₂)₂ (LiFSI), lithium (trifluoromethylsulfonyl)(nonafluorobutanesulfonyl)imide LiN(SO₂CF₃)(SO₂C₄F₉), lithium (fluorosulfonyl)(nonafluorobutanesulfonyl)imide LiN(SO₂F)(SO₂C₄F₉), lithium (nonafluoro butan-2-one sulfonyl)(trifluoromethylsulfonyl)imide LiN(SO₂C₂F₄OC₂F₅)(SO₂CF₃), lithium (nonafluoro butan-2-one sulfonyl)(fluorosulfonyl)imide LiN(SO₂C₂F₄OC₂F₅)(SO₂F) and/or lithium trifluoromethanesulfonate Li(CF₃)SO₃ (LiTf). Preferred lithium sulfonimide salts are bis(trifluoromethanesulfonyl)imide (LiTFSI) and lithium bis(fluorosulfonyl)imide (LiFSI). A preferred methide salt is LiC(CF₃SO₂)₃. A preferred oxalatoborate salt is lithium bis(oxalato)borate (LiBOB).

Particularly sulfonimide salts provide a high ionic conductivity and show enhanced thermal and electrochemical stability and prevent an immediate formation of HF by hydrolysis as may occur with LiPF₆. Particularly, the anodic aluminum dissolution, to which usually is referred to herein as "corrosion", can be prevented by using a fluorinated carbamate according to the invention. A use of sulfonimide salts such as LiTFSI will result in significantly safer lithium-ion batteries. Particularly LiTFSI, LiFSI and the sulfonate Li-Triflate, which are known to suffer anodic aluminum dissolution, can advantageously be utilized as electrolyte salts in lithium-ion batteries using a fluorinated carbamate according to the invention as the solvent.

A preferred -CF₃ and -CN-substituted Hückel-anion is the anion according to the following formula

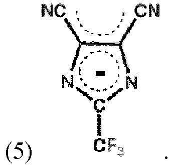

Other anions of electrolyte salts are secondary carbanions substituted by electron-withdrawing groups such as (CF₃SO₂)₂CH⁻ and tertiary carbanions substituted by electron-withdrawing groups such as (CF₃SO₂)₃C⁻ which is also denoted methide, (N≡C)₃C⁻ or (FSO₂)₃C⁻, and aromatic anions such as pentacyano cyclopentadienyl (N≡C)₅C₅⁻.

The term "arylsulfonyl, trifluoromethane sulfonyl amide anion" according to the invention is to be understood as meaning an anion (X-C₆H₄-SO₂) (CₙF₂ₙ₊₁SO₂)N⁻ wherein X is selected from the group of electron-donating substituents methyl, methoxy and/or amine or the group of electron-withdrawing groups nitrile, nitro and/or CF₃SO₂, or X is a functionality allowing its polymerization such as a double bond (vinyl) or an epoxy group.

The term "SO₃⁻-end-capped polyethylene glycol" according to the invention is to be understood as meaning monomethyl PEG end-capped by one or two ionic moieties according to the formula (6) CH₃-(O-CH₂-CH₂)n-O-SO₃⁻ wherein 1 ≤ n ≤ 23 and preferably 3 ≤ n ≤ 8 and, alternatively, PEG twice end-capped by SO₃⁻ according to the formula (7) ⁻O₃S-(O-CH₂-CH₂)ₙ-O-SO₃ wherein 1 ≤ n ≤ 46 and preferably 8 ≤ n ≤ 20.

The electrolyte solvent may be a liquid or an ionic liquid, for example based on the anions above. The electrolyte can fill a porous separator or it can be a gelled electrolyte as a copolymer poly(vinylidene fluoride-co-hexafluoropropene) (PVDF-HFP) or a polymethacrylonitrile network.

Another aspect of the invention refers to an alkali or alkaline earth metal-based or an Al-based or Zn-based electrochemical energy storage device, particularly a lithium battery, a primary or secondary lithium-ion battery, a lithium polymer battery or a lithium-ion capacitor, comprising an electrolyte solution according to the invention. The term "energy storage device" comprises primary and secondary, i.e., rechargeable batteries. However, rechargeable batteries or accumulators are also denoted with the term "battery" which usually is used as a generic term. Hence, for simplicity if not denoted otherwise, in the present invention the term "battery" is used synonymous to also designate "accumulators". Preferably, the electrolyte solution according to the invention is usable for a primary or secondary lithium-ion battery or a lithium polymer battery. A lithium-ion battery for example comprises a first electrode of a cathodic material, a second electrode of an anodic material and an electrolyte. Advantageously, an electrochemical energy storage device, particularly a secondary lithium battery, comprising the electrolyte solution according to the invention provides increased safety.

The electrolyte solution comprises an electrolyte salt and an electrolyte solvent, wherein the electrolyte solvent comprises at least one fluorinated carbamate according to the general formula (1) R¹R²NC(O)OCR³R⁴R⁵ wherein:
- R¹, R²: are selected, the same or independently of the other, from the group comprising H, linear C₁-C₄-alkyl, branched C₃-C₄-alkyl and/or C₃-C₇-cycloalkyl, with the provision that when one of R¹ or R² is C₃-C₇-cycloalkyl the other is H or a C₁-C₂ alkyl group, wherein said alkyl or cycloalkyl groups are optionally substituted by at least one fluorine atom, or
- R¹ and R²: directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
- R³: is selected from the group comprising H, F, CN, perfluorinated linear C₁-C₄-alkyl and/or perfluorinated branched C₃-C₄-alkyl;
- R⁴, R⁵: are selected, the same or independently of the other, from the group comprising perfluorinated linear C₁-C₄-alkyl and/or perfluorinated branched C₃-C₄-alkyl, and
wherein the electrolyte solvent comprises the fluorinated carbamate in an amount in the range from > 80 wt% to ≤ 100 wt%, referring to a total amount of the electrolyte solvent of 100 wt%, and wherein the electrolyte salt is selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts.

The substituent R³ may be selected from the group comprising H, F, CN, and perfluorinated methyl, ethyl, n-propyl, n-butyl, isopropyl, isobutyl, sec-butyl and/or tert-butyl. The substituent R³ may particularly be selected from H, F, and perfluorinated methyl, ethyl, propyl or isopropyl. In preferred embodiments, R³ is selected from the group comprising H and/or perfluorinated linear C₁-C₃-alkyl. Preferably R³ is selected from the group comprising H, CF₃ and/or C₂F₅. R³ particularly may be hydrogen. The substituents R⁴ and R⁵ may be identical or different from each other selected from the group comprising perfluorinated methyl, ethyl, n-propyl or n-butyl, or isopropyl, isobutyl, sec-butyl and/or tert-butyl. The substituents R⁴ and R⁵ particularly may be identical or different from each other selected from perfluorinated methyl, ethyl, propyl or isopropyl. In preferred embodiments, R⁴ and R⁵ are the same or independently of the other perfluorinated linear C₁-C₃-alkyl, preferably selected from the group comprising CF₃ and/or C₂F₅.

The substituents R¹ and R² may be identical or different from each other selected from linear C₁-C₄-alkyl or branched C₃-C₄-alkyl. One or more hydrogen atom of the alkyl groups may be substituted by a fluorine atom. The alkyl groups alternatively may not be substituted by fluorine atoms, and thus reduce production costs. In preferred embodiments, R¹ and R² are selected, the same or independently of the other, from the group comprising linear or branched C₁-C₃-alkyl, preferably selected from the group comprising methyl and/or ethyl.

In an embodiment, the fluorinated carbamate is selected from the group comprising 1,1,1,3,3,3-hexafluoropropan-2-yl dimethylcarbamate, 1,1,1,3,3,3-hexafluoropropan-2-yl diethylcarbamate and mixtures thereof.

In embodiments, the electrolyte solution comprises the fluorinated carbamate in a range from ≥ 85 wt% to ≤ 100 wt%, preferably in a range of ≥ 90 wt% to ≤ 100 wt%, more preferably in a range of ≥ 95 wt% to ≤ 100 wt%, referring to a total amount of the electrolyte solvent of 100 wt%. The fluorinated carbamates are usable for the inhibition of aluminum current collector corrosion together with electrolyte solvents such as carbonates, esters, lactones or nitriles, in particular with non-fluorinated organic carbonates. In embodiments, the electrolyte solution comprises at least one non-fluorinated organic carbonate selected from the group comprising ethylene carbonate, ethyl methyl carbonate, propylene carbonate, dimethyl carbonate, diethyl carbonate, and mixtures thereof. A preferred mixture of carbonate solvents is a carbonate solvent mixture of ethylene carbonate (EC) and dimethyl carbonate (DMC), for example in a weight ratio of 1:1.

The electrolyte solvent is advantageously usable with sulfonimides and other electrolyte salts suffering aluminum current collector corrosion. Such salts preferably are selected from the group comprising alkali or alkaline earth metal sulfonimide, methide, sulfonate and oxalatoborate salts. In a preferred embodiment, the alkali or alkaline earth metal sulfonimide or sulfonate salt is a lithium salt selected from the group comprising lithium bis(trifluoromethanesulfonyl)imide LiN(SO₂CF₃)₂ (LiTFSI), lithium bis(fluorosulfonyl)imide LiN(FSO₂)₂ (LiFSI), lithium (trifluoromethylsulfonyl)(nonafluorobutanesulfonyl)imide LiN(SO₂CF₃)(SO₂C₄F₉), lithium (fluorosulfonyl)(nonafluorobutanesulfonyl)imide LiN(SO₂F)(SO₂C₄F₉), lithium (nonafluoro butan-2-one sulfonyl)(trifluoromethylsulfonyl)imide LiN(SO₂C₂F₄OC₂F₅)(SO₂CF₃), lithium (nonafluoro butan-2-one sulfonyl)(fluorosulfonyl)imide LiN(SO₂C₂F₄OC₂F₅)(SO₂F) and/or lithium trifluoromethanesulfonate Li(CF₃)SO₃ (LiTf). Preferred lithium sulfonimide salts are bis(trifluoromethanesulfonyl)imide (LiTFSI) and lithium bis(fluorosulfonyl)imide (LiFSI). A preferred methide salt is LiC(CF₃SO₂)₃. A preferred oxalatoborate salt is lithium bis(oxalato)borate (LiBOB).

Another aspect of the invention refers to a method for preventing aluminum current collector corrosion in an alkali or alkaline earth metal-based or an Al-based or Zn-based electrochemical energy storage device containing an electrolyte solution comprising an electrolyte salt and an electrolyte solvent, the method comprising the step of using an electrolyte solvent comprising in a range from ≥ 80 wt% to ≤ 100 wt%, referring to a total amount of the electrolyte solvent of 100 wt%, of at least one fluorinated carbamate according to the general formula (1) R¹R²NC(O)OCR³R⁴R⁵ wherein:
- R¹, R²: are selected, the same or independently of the other, from the group comprising H, linear C₁-C₄-alkyl, branched C₃-C₄-alkyl and/or C₃-C₇-cycloalkyl, with the provision that when one of R¹ or R² is C₃-C₇-cycloalkyl the other is H or a C₁-C₂ alkyl group, wherein said alkyl or cycloalkyl groups are optionally substituted by at least one fluorine atom, or
- R¹ and R²: directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
- R³: is selected from the group comprising H, F, CN, perfluorinated linear C₁-C₄-alkyl and/or perfluorinated branched C₃-C₄-alkyl;
- R⁴, R⁵: are selected, the same or independently of the other, from the group comprising perfluorinated linear C₁-C₄-alkyl and/or perfluorinated branched C₃-C₄-alkyl, and
wherein the electrolyte salt is selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts.

Advantageously, the method increases the safety of an electrochemical energy storage device, particularly a lithium battery, a primary or secondary lithium-ion battery, a lithium polymer battery or a lithium-ion capacitor. Preferably, the device is a primary or secondary lithium-ion battery or a lithium polymer battery.

Another aspect of the invention refers to the use of a fluorinated carbamate according to the general formula (1) R¹R²NC(O)OCR³R⁴R⁵ wherein
- R¹, R²: are selected, the same or independently of the other, from the group comprising H, linear C₁-C₄-alkyl, branched C₃-C₄-alkyl and/or C₃-C₇-cycloalkyl, with the provision that when one of R¹ or R² is C₃-C₇-cycloalkyl the other is H or a C₁-C₂ alkyl group, wherein said alkyl or cycloalkyl groups are optionally substituted by at least one fluorine atom, or
- R¹ and R²: directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
- R³: is selected from the group comprising H, F, CN, perfluorinated linear C₁-C₄-alkyl and/or perfluorinated branched C₃-C₄-alkyl;
- R⁴, R⁵: are selected, the same or independently of the other, from the group comprising perfluorinated linear C₁-C₄-alkyl and/or perfluorinated branched C₃-C₄-alkyl,
for the prevention of aluminum current collector corrosion in an alkali or alkaline earth metal-based or an Al-based or Zn-based electrochemical energy storage device, containing an electrolyte solution comprising an electrolyte salt selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts, and an electrolyte solvent, wherein the fluorinated carbamate is used in an amount in the range from ≥ 80 wt% to ≤ 100 wt%, referring to a total amount of the electrolyte solvent of 100 wt%.

Referring to the method for preventing aluminum current collector corrosion in an alkali or alkaline earth metal-based or an Al-based or Zn-based electrochemical energy storage device and/or to the use of a fluorinated carbamate according to the general formula (1) R¹R²NC(O)OCR³R⁴R⁵, the substituent R³ may be selected from the group comprising H, F, CN, and perfluorinated methyl, ethyl, n-propyl, n-butyl, isopropyl, isobutyl, sec-butyl and/or tert-butyl. The substituent R³ may particularly be selected from H, F, and perfluorinated methyl, ethyl, propyl or isopropyl. In preferred embodiments, R³ is selected from the group comprising H and/or perfluorinated linear C₁-C₃-alkyl. Preferably, R³ is selected from the group comprising H, CF₃ and/or C₂F₅. R³ particularly may be hydrogen. The substituents R⁴ and R⁵ may be identical or different from each other selected from the group comprising perfluorinated methyl, ethyl, n-propyl or n-butyl, or isopropyl, isobutyl, sec-butyl and/or tert-butyl. The substituents R⁴ and R⁵ particularly may be identical or different from each other selected from perfluorinated methyl, ethyl, propyl or isopropyl. In preferred embodiments, R⁴ and R⁵ are the same or independently of the other perfluorinated linear C₁-C₃-alkyl, preferably selected from the group comprising CF₃ and/or C₂F₅.

The substituents R¹ and R² may be identical or different from each other selected from linear C₁-C₄-alkyl or branched C₃-C₄-alkyl. One or more hydrogen atom of the alkyl groups may be substituted by a fluorine atom. The alkyl groups alternatively may not be substituted by fluorine atoms, and thus reduce production costs. In preferred embodiments, R¹ and R² are selected, the same or independently of the other, from the group comprising linear or branched C₁-C₃-alkyl, preferably selected from the group comprising methyl and/or ethyl.

In an embodiment, the fluorinated carbamate is selected from the group comprising 1,1,1,3,3,3-hexafluoropropan-2-yl dimethylcarbamate, 1,1,1,3,3,3-hexafluoropropan-2-yl diethylcarbamate and mixtures thereof.

In embodiments, the electrolyte solution comprises the fluorinated carbamate in a range from ≥ 85 wt% to ≤ 100 wt%, preferably in a range of ≥ 90 wt% to ≤ 100 wt%, more preferably in a range of ≥ 95 wt% to ≤ 100 wt%, referring to a total amount of the electrolyte solvent of 100 wt%. The fluorinated carbamates are usable for the inhibition of aluminum current collector corrosion together with electrolyte solvents such as carbonates, esters, lactones or nitriles, in particular with non-fluorinated organic carbonates. In embodiments, the electrolyte solution comprises at least one non-fluorinated organic carbonate selected from the group comprising ethylene carbonate, ethyl methyl carbonate, propylene carbonate, dimethyl carbonate, diethyl carbonate, and mixtures thereof. A preferred mixture of carbonate solvents is a carbonate solvent mixture of ethylene carbonate (EC) and dimethyl carbonate (DMC), for example in a weight ratio of 1:1.

The electrolyte solvent is advantageously usable with sulfonimides and other electrolyte salts suffering aluminum current collector corrosion. Such salts preferably are selected from the group comprising alkali or alkaline earth metal sulfonimide, methide, sulfonate and oxalatoborate salts. In a preferred embodiment, the alkali or alkaline earth metal sulfonimide or sulfonate salt is a lithium salt selected from the group comprising lithium bis(trifluoromethanesulfonyl)imide LiN(SO₂CF₃)₂ (LiTFSI), lithium bis(fluorosulfonyl)imide LiN(FSO₂)₂ (LiFSI), lithium (trifluoromethylsulfonyl)(nonafluorobutanesulfonyl)imide LiN(SO₂CF₃)(SO₂C₄F₉), lithium (fluorosulfonyl)(nonafluorobutanesulfonyl)imide LiN(SO₂F)(SO₂C₄F₉), lithium (nonafluoro butan-2-one sulfonyl)(trifluoromethylsulfonyl)imide LiN(SO₂C₂F₄OC₂F₅)(SO₂CF₃), lithium (nonafluoro butan-2-one sulfonyl)(fluorosulfonyl)imide LiN(SO₂C₂F₄OC₂F₅)(SO₂F) and/or lithium trifluoromethanesulfonate Li(CF₃)SO₃ (LiTf). Preferred lithium sulfonimide salts are bis(trifluoromethanesulfonyl)imide (LiTFSI) and lithium bis(fluorosulfonyl)imide (LiFSI). A preferred methide salt is LiC(CF₃SO₂)₃. A preferred oxalatoborate salt is lithium bis(oxalato)borate (LiBOB).

Unless otherwise defined, the technical and scientific terms used herein have the same meaning as commonly understood by one of ordinary skill in the art to which this invention belongs.

The examples which follow serve to illustrate the invention in more detail but do not constitute a limitation thereof.

In the figures show:
- Figure 1: a cyclic voltammogram of a 1M solution of LiTFSI in 1,1,1,3,3,3-hexafluoropropan-2-yl dimethylcarbamate (F-C2) for 100 cycles using aluminum as working electrode.
- Figure 2: potential profiles of an NMC half-cell for the cycles 15, 20, 25, 30 and 35 at C/5 a 1M solution of LiTFSI in 1,1,1,3,3,3-hexafluoropropan-2-yl dimethylcarbamate (F-C2), cut-off potentials: 3.0 and 4.3 V vs. Li/Li⁺.
- Figure 3: a cyclic voltammogram for a 1M solution of LiTFSI in N,N-dimethyl trifluoroethyl carbamate (F-C1) for 100 cycles using aluminum as working electrode.
- Figure 4: potential profiles of an NMC half-cell for the cycles 15, 20, 25, 30 and 35 at C/5 using a 1M solution of LiTFSI in N,N-dimethyl trifluoroethyl carbamate (F-C1) as electrolyte, cut-off potentials: 3.0 and 4.3 V vs. Li/Li⁺.
- Figure 5: a galvanostatic cycling comparison of LiNi_{1/3}Mn_{1/3}CO_{1/3}O₂ (NMC)-based cathodes in half-cell configuration using 1M LiTFSI in N,N-dimethyl trifluoroethyl carbamate (F-C1) or in 1,1,1,3,3,3-hexafluoropropan-2-yl dimethylcarbamate (F-C2) as electrolytes.
- Figure 6: a cyclic voltammogram for a 1M solution of LiTFSI in 1,1,1,3,3,3-hexafluoropropan-2-yl diethylcarbamate (F-C4) for 100 cycles using aluminum as working electrode.
- Figure 7: the galvanostatic cycling of LiNi_{1/3}Mn_{1/3}CO_{1/3}O₂ (NMC)-based cathodes in half-cell configuration using 1M LiTFSI in 1,1,1,3,3,3-hexafluoropropan-2-yl diethylcarbamate (F-C4) as electrolyte.
- Figure 8: potential profiles of a NMC half-cell for the cycles 15, 20, 25, 30 and 35 at C/5 using a 1M solution of LiTFSI in 1,1,1,3,3,3-hexafluoropropan-2-yl diethylcarbamate (F-C4) as electrolyte, cut-off potentials: 3.0 and 4.3 V vs. Li/Li⁺.
- Figure 9: cyclic voltammograms for 100 cycles using aluminum as working electrode in a 1M solution ofLiTFSI in a solvent mixture of 33 wt% (1:1:1), 50 wt% (2:1:1) or 80 wt% (8:1:1) of 1,1,1,3,3,3-hexafluoropropan-2-yl dimethylcarbamate (F-C2) in EC/DMC (1:1), in the figures 9a), 9b) and 9c), respectively.

### Example 1

### Synthesis ofN,N-dimethyl trifluoroethyl carbamate (F-C1)

A suspension of 1.5 eq. sodium hydride (> 99%, Sigma-Aldrich) in freshly distilled tetrahydrofuran (> 99%, Sigma-Aldrich) was put in a round-bottom flask under inert atmosphere. The flask was then cooled down to 0 °C and kept under inert atmosphere for the entire length of the reaction. 1 eq. of 1,1,1 -trifluoroethanol (>99% Acros Organics) was then added to the slurry under stirring, and after the formation of the alcoholate 1 eq. ofN,N dimethyl carbamyl chloride (> 99%, Sigma-Aldrich) was added as well. The flask was gradually warmed to room temperature (25 ± 2 °C), and the reaction was carried on for 24 hours. At the end of the reaction, a solution of water saturated with Na₂CO₃ was added, and several liquid extractions with diethyl ether were put in place. The organic phases were dried under magnesium sulfate and the carbamate was then obtained as a colorless liquid by distillation under reduced pressure at 100 mm Hg and room temperature.

### Example 2

### Synthesis of 1,1,1,3,3,3-hexafluoropropan-2-yl dimethylcarbamate (F-C2)

The preparation was carried out as described above in Example 1, but using 1 eq. of 1,1,1,3,3,3-hexafluoropropanol (>99% Acros Organics). 1,1,1,3,3,3-hexafluoropropan-2-yl dimethylcarbamate was obtained as a colorless liquid.

### Example 3

### Synthesis of 1,1,1,3,3,3-hexafluoropropan-2-yl diethylcarbamate (F-C4)

The preparation was carried out as described in example 1, but using 1 eq. of 1,1,1,3,3,3-hexafluoropropanol (>99% Acros Organics) and N,N diethyl carbamyl chloride (> 99% , Sigma-Aldrich). 1,1,1,3,3,3-hexafluoropropan-2-yl diethylcarbamate was obtained as a colorless liquid.

### Electrochemical characterization

### Solvents and electrolyte solutions:

The electrolyte solvents *N,N-*dimethyl trifluoroethyl carbamate (F-1C), 1,1,1,3,3,3-hexafluoropropan-2-yl dimethylcarbamate (F-2C) and 1,1,1,3,3,3-hexafluoropropan-2-yl diethylcarbamate (F-4C) were used as synthesized according to examples 1 to 3, respectively.

Ethylene carbonate (EC), diethyl carbonate (DEC), and dimethyl carbonate (DMC), all battery grade, were purchased at UBE Corporation and Ferro Corporation.

The conductive salt lithium bis(trifluoromethanesulfonyl)imide (LiTFSI, 3M) was set to 1 mol L⁻¹ for all investigated electrolyte compositions. Electrolyte solutions were prepared by mixing the solvents in their respective weight ratios and dissolving LiTFSI in an appropriate amount to yield a 1M solution.

### Electrode preparation:

Positive electrodes were prepared by combining Li[Ni_{1/3}Mn_{1/3}Co_{1/3}]O₂ (NMC, Toda) as the active material, polyvinylidene fluoride (PVDF, Kynar^{®} HSV 900, ARKEMA) as binder, and the conductive carbon additive Super C65^{®} (TIMCAL). N-Methyl-2-pyrrolidone (NMP) was used as solvent for the PVdF binding agent. Electrode pastes were prepared using a Vario-Planetary Mill Pulverisette 4 (Fritsch). The resulting slurry was cast on aluminum foil (battery grade, 99.99% purity, Evonik), electrodes having a diameter of 12 mm were punched and subsequently dried at 120 °C for 24 h. The electrode final composition was 88 wt% NMC, 7 wt% conductive carbon, and 5 wt% PVdF. The average mass loading of the electrodes was about 7 mg cm⁻².

### Cell studies:

Electrochemical studies on lithium-ion half-cells were carried out in three-electrode Swagelok® cells using lithium metal foil (Rockwood Lithium, battery grade) as counter and reference electrodes. Accordingly, all the potential values given refer to the Li/Li⁺ reference couple. Glass microfiber (Whatman GF/D) was used as separator. Cells were assembled in an argon-filled MBraun glove box with a water and oxygen content of less than 0.5 ppm. Electrochemical studies were performed at 20 °C ± 2 °C. Galvanostatic cycling was performed by means of Maccor Battery Tester 4300.

### SEM analysis:

*Ex situ* scanning electron microscope (SEM) analysis of aluminum current collectors (EVONIK, purity > 99.9%) was carried out on a ZEISS Auriga^{®} microscope.

### Example 4

### Determination of anodic aluminum dissolution by LiTFSI in 1,1,1,3,3,3-hexafluoropropan-2-yl dimethylcarbamate (F-C2)

An electrolyte solution of 1M LiTFSI in 1,1,1,3,3,3-hexafluoropropan-2-yl dimethylcarbamate (F-C2) was prepared and cyclic voltammetry was performed by means of a VMP potentiostat/galvanostat, performing cyclic voltammetry using an aluminum disk of a diameter of 12 mm (Evonik, 99.99% purity) as working electrode. The sweep rate was set to 5 mV s⁻¹. The reversing potentials were set to 3.3 and 5.1 V vs Li/Li⁺ and the cell was polarized for 100 continuous cyclic sweeps. Subsequently, the cycled Swagelok^{®} cells were disassembled in an MBraun dry box under argon. The polarized Al foils were rinsed with dimethyl carbonate (DMC), dried under vacuum, and transferred to a high resolution scanning electron microscope (HRSEM, ZEISS Auriga^{®} microscope), using a modified sample holder to avoid contact to air and moisture.

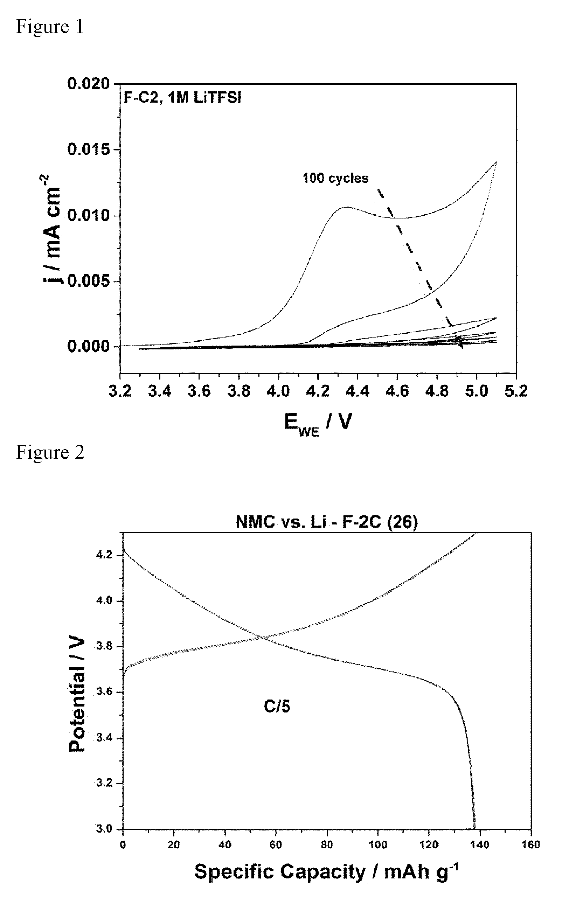

Figure 1 shows the cyclic voltammogram for 1M LiTFSI in F-C2 for 100 cycles. As can be taken from the figure 1, after the first cycle the observed current density decreased significantly and almost no current was observed subsequently upon the second and the continuous potentiodynamic sweeps. No signs of anodic aluminum dissolution were detectable by performing the cyclic voltammetry. Also a subsequent SEM analysis of the aluminum foil polarized by the cyclic voltammetry in F-C2 comprising 1M LiTFSI did not show any indication of anodic aluminum dissolution and confirmed the prevention of aluminum dissolution. It is assumed that 1,1,1,3,3,3-hexafluoropropan-2-yl dimethylcarbamate (F-C2) initially formed a protective surface film of AlF₃ on the aluminum surface and a thus prevented anodic aluminum dissolution of the aluminum foil upon further polarization.

### Example 5

### Electrochemical cell studies of an NMC half-cell using LiTFSI in 1,1,1,3,3,3-hexafluoropropan-2-yl dimethylcarbamate (F-C2)

An electrolyte solution of 1M LiTFSI in 1,1,1,3,3,3-hexafluoropropan-2-yl dimethylcarbamate (F-C2) was prepared and electrochemical cell studies were performed as described above. The cut-off potentials were at 3.0 and 4.3 V vs. Li/Li⁺.

Figure 2 shows the corresponding potential profiles of the NMC half cell for the cycles 15, 20, 25, 30 and 35 at C/5 using F-C2 as electrolyte solvent. As can be taken from the figure 2, the potential profile was well preserved using F-C2 as the electrolyte solvent.

### Comparative Example 6

### Determination of anodic aluminum dissolution by LiTFSI in N,N-dimethyl trifluoroethyl carbamate (F-C1)

An electrolyte solution of 1M LiTFSI in N,N-dimethyl trifluoroethyl carbamate (F-C1) was prepared and cyclic voltammetry was performed by means of a VMP potentiostat/galvanostat, performing cyclic voltammetry using an aluminum disk of a diameter of 12 mm (Evonik, 99.99% purity) as working electrode. The sweep rate was set to 5 mV s⁻¹. The reversing potentials were set to 3.3 and 5.1 V vs Li/Li⁺ and the cell was polarized for 100 continuous cyclic sweeps. Subsequently, the cycled Swagelok^{®} cells were disassembled in an MBraun dry box under argon. The polarized Al foils were rinsed with dimethyl carbonate (DMC), dried under vacuum, and transferred to a high resolution scanning electron microscope (HRSEM, ZEISS Auriga^{®} microscope), using a modified sample holder to avoid contact to air and moisture.

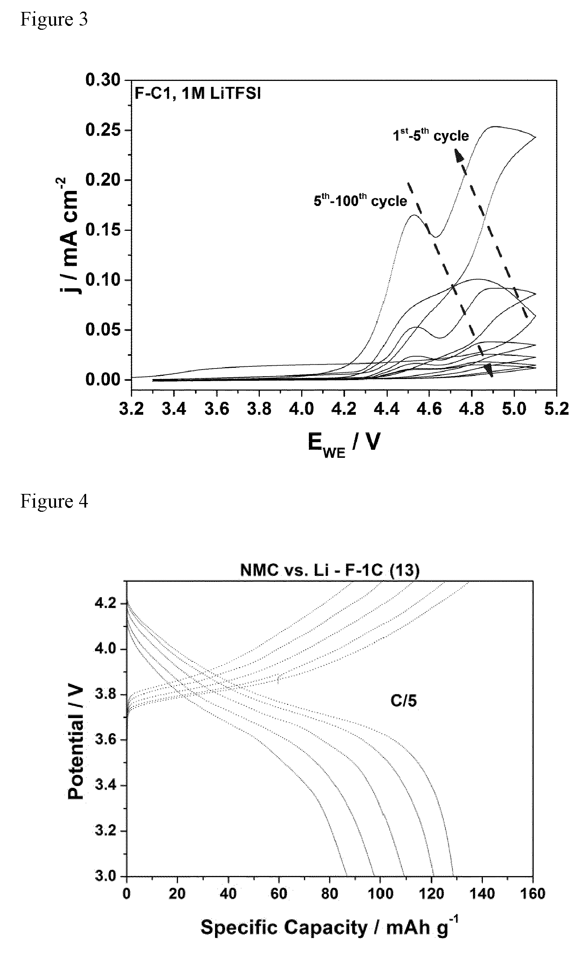

Figure 3 shows the cyclic voltammogram for 1M LiTFSI in F-C1 as electrolyte solvent for 100 cycles. As can be taken from the figure 3, the cyclic voltammetry of F-C1-based electrolyte using lithium metal as counter and reference electrode and blank aluminum foil as working electrode showed severe anodic aluminum dissolution detectable by performing the cyclic voltammetry. Also a subsequent SEM analysis of the aluminum current collector showed severe corrosion of the anodic aluminum foil polarized by the cyclic voltammetry in F-C1. This shows that the lesser fluorinated carbamate N,N-dimethyl trifluoroethyl carbamate (F-C1) did not prevent aluminium corrosion.

### Comparative Example 7

### Electrochemical cell studies of an NMC half-cell using LiTFSI in 1 N,N-dimethyl trifluoroethyl carbamate (F-C1)

An electrolyte solution of 1M LiTFSI in N,N-dimethyl trifluoroethyl carbamate (F-C1) was prepared and an electrochemical cell studies was performed as described above. The cut-off potentials were at 3.0 and 4.3 V vs. Li/Li⁺.

Figure 4 shows the corresponding potential profiles of the NMC half-cell for the cycles 15, 20, 25, 30 and 35 at C/5 using F-C1 as electrolyte solvent. As can be taken from the figure 4, the obtainable specific capacity is substantially decreasing upon cycling, indicated by the shortening of the corresponding potential profiles.

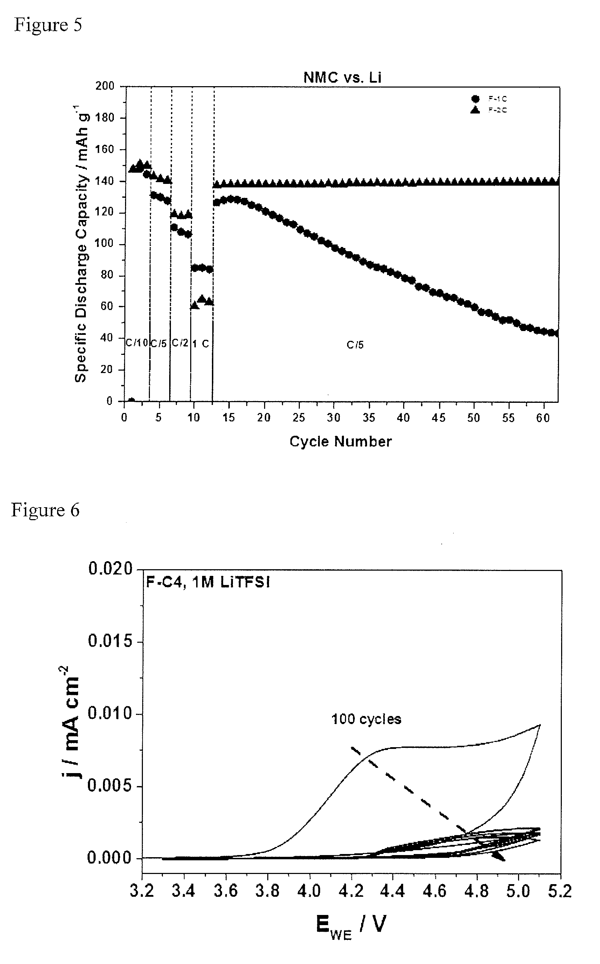

Figure 5 shows a comparison of the galvanostatic cycling of the Li/LiNi_{1/3}Mn_{1/3}CO_{1/3}O₂ (NMC)-based cathode in half-cell configuration with Li as reference electrode and 1M LiTFSI in N,N-dimethyl trifluoroethyl carbamate (F-C1) or in 1,1,1,3,3,3-hexafluoropropan-2-yl dimethylcarbamate (F-C2) as electrolytes as described in example 5 and the comparative example 7. It can be seen in the figure 5 that the NMC half-cells using the F-C1-based electrolytes show rapid capacity fading, while NMC half-cells using the F-C2-based electrolytes showed a stable cycling performance.

### Example 8

### Determination of anodic aluminum dissolution by LiTFSI in 1,1,1,3,3,3-hexafluoropropan-2-yl diethylcarbamate (F-C4)

An electrolyte solution of 1M LiTFSI in 1,1,1,3,3,3-hexafluoropropan-2-yl diethylcarbamate (F-C4) was prepared and cyclic voltammetry was performed by means of a VMP potentiostat/galvanostat, performing cyclic voltammetry using an aluminum disk of a diameter of 12 mm (Evonik, 99.99% purity) as working electrode. The sweep rate was set to 5 mV s⁻¹. The cell was polarized for 100 continuous cyclic sweeps. Subsequently, the cycled cells were disassembled and the polarized A1 foils were rinsed with dimethyl carbonate, dried, and transferred to a high resolution scanning electron microscope (HRSEM, ZEISS Auriga^{®}).

Figure 6 shows the cyclic voltammogram for 1M LiTFSI in F-C4 as solvent for 100 cycles. Figure 1 shows that also for F-C4 the observed current density decreased significantly after the first cycle and almost no current was observed subsequently upon the second and the continuous potentiodynamic sweeps. Also the subsequent SEM analysis of the aluminum foil polarized by performing cyclic voltammetry confirmed that no aluminum corrosion was detectable. This shows that also 1,1,1,3,3,3-hexafluoropropan-2-yl diethylcarbamate (F-C4) prevented anodic aluminum dissolution of the aluminum foil.

### Example 9

### Electrochemical cell studies of NMC half-cells using LiTFSI in 1,1,1,3,3,3-hexafluoropropan-2-yl diethylcarbamate (F-C4)

An electrolyte solution of 1M LiTFSI in 1,1,1,3,3,3-hexafluoropropan-2-yl diethylcarbamate (F-C4) was prepared and electrochemical cell studies were performed as described above. The cut-off potentials were set to 3.0 and 4.3 V vs. Li/Li⁺.

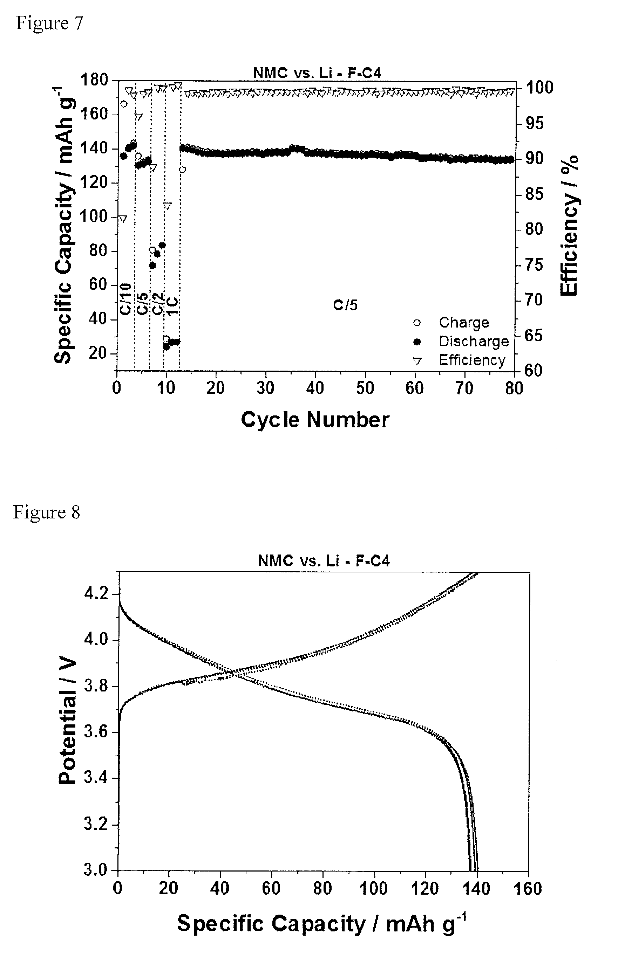

Figure 7 shows the galvanostatic cycling of the NMC-based cathodes in half-cell configuration using 1M LiTFSI in 1,1,1,3,3,3-hexafluoropropan-2-yl diethylcarbamate (F-C4) as electrolyte. It can be seen in figure 7 that also the NMC half-cells comprising F-C4-based electrolytes showed stable cycling performance.

Figure 8 shows the corresponding potential profiles of the NMC half cell for the cycles 15, 20, 25, 30 and 35 at C/5 using F-C4 as electrolyte solvent. As can be taken from figure 8, the potential profile was well preserved using F-C4 as electrolyte solvent.

The examples 4 to 9 show that 1,1,1,3,3,3-hexafluoropropan-2-yl dimethyl and diethyl carbamate can be readily used for lithium-ion cells and are sufficiently stable towards oxidation, delivering the typical specific capacities for NMC-based cathodes in half-cell configuration, high cycling stability, and the characteristic electrochemical performance for such cathodes. These data indicate that the fluorinated carbamates appear as a promising electrolyte solvent for high voltage cathode materials such as NMC after a first activation cycle.

### Example 10

### Determination of different amounts of fluorinated carbamate as electrolyte solvent

The effect of different amounts of the fluorinated carbamate as electrolyte solvent for LiTFSI in regard of the prevention of aluminum current collector corrosion was investigated. Electrolyte solutions of 1M LiTFSI in the state-of-the-art carbonate solvent mixture of ethylene carbonate (EC) and dimethylcarbonate (DMC) in a weight ratio of 1:1 containing 33 wt%, 50 wt% or 80 wt%, respectively, of 1,1,1,3,3,3-hexafluoropropan-2-yl dimethylcarbamate (F-C2) were prepared by adding F-C2 in aratio of 1:1:1, 2:1:1 or 8:1:1, respectively, to EC/DMC (1:1).

Cyclic voltammetry was performed by means of a VMP potentiostat/galvanostat. For these studies, an aluminum disk of a diameter of 12 mm (Evonik, 99.99% purity) was used as working electrode with lithium metal as counter- and reference-electrode. The sweep rate was set to 5 mV s⁻¹. The reversing potentials were set to 3.3 and 5.1 V vs Li/Li⁺ and the cell was polarized for 100 continuous cyclic sweeps. Subsequently, the cycled cells were disassembled, and the polarized aluminum foils were rinsed, dried and transferred to a high resolution scanning electron microscope.

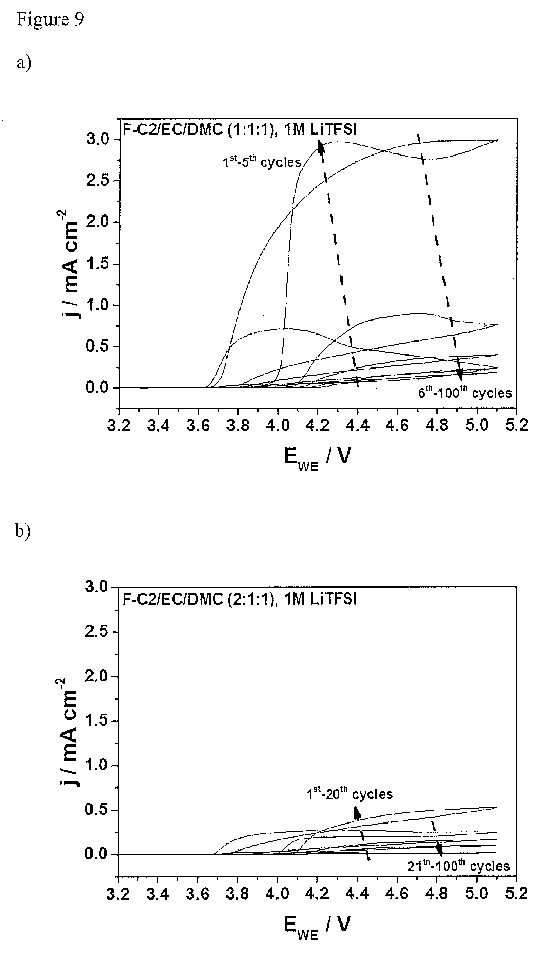

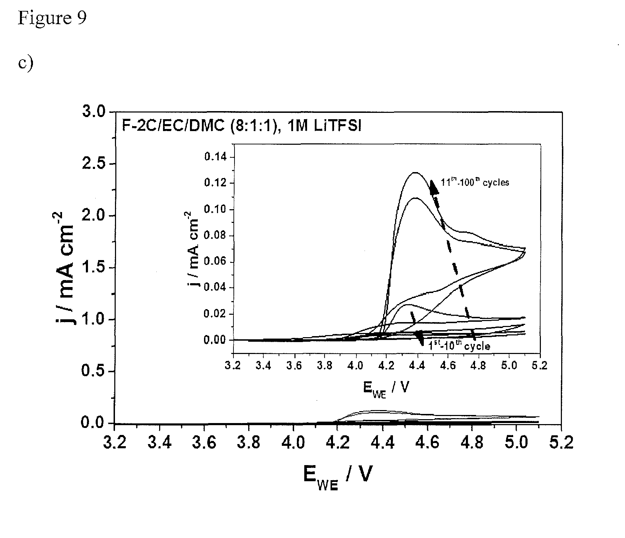

Figures 9a), 9b) and 9c), respectively, show the cyclovoltammograms for 1M LiTFSI in 33 wt%, 50 wt% or 80 wt% of 1,1,1,3,3,3-hexafluoropropan-2-yl dimethylcarbamate (F-C2) in a 1:1 mixture of EC/DMC for 100 cycles using aluminum as working electrode. Figure 9a) shows a continuously increasing evolving current density during the continuous potentiodynamic sweeps. Within the first 5 cyclic sweeps a current density of up to 3 mA cm⁻² was detected, indicating a severe anodic dissolution of the aluminum current collector, i.e., its corrosion as confirmed by massive pitting corrosion was observed by subsequent SEM analysis of the aluminum electrode. This illustrates that 33 wt% F-C2 as electrolyte solvent using LiTFSI as salt is not sufficient to avoid detrimental anodic aluminum dissolution of the current collector. The Figure 9b) shows that 50 wt% F-C2 resulted in significantly decreased current densities. However, for the first 20 cycles a current density of about 0.5 mA cm⁻² was still detected and a massive pitting corrosion at the aluminum surface was observed by subsequent SEM analysis. The cyclic voltammogram given in Figure 9c) illustrates further decreased current densities to about 0.1 mA cm⁻² using 80 wt% F-C2 as electrolyte solvent. A suppression of the detrimental aluminum dissolution in the first 10 polarization cycles was observed, indicated by the continuously decreasing current density upon these cyclic sweeps and confirmed by subsequent SEM analysis. The cyclic voltammograms presented in Figure 9 hence illustrate that about 80 wt% of the fluorinated carbamate according to the invention provide an effective aluminum passivation with respect to the occurring current within the initial cycles and substantially reduced the aluminum current collector corrosion.

The work leading to this invention has received funding from the European Union Seventh Framework Programme (FP7/2007-2013) under grant agreement n° 29100329 AMELIE.

## Claims

1. An electrolyte solution comprising an electrolyte salt and an electrolyte solvent, wherein the electrolyte solvent comprises at least one fluorinated carbamate according to the general formula (1) R¹R²NC(O)OCR³R⁴R⁵ wherein:
R¹, R² are selected, the same or independently of the other, from the group comprising H, linear C₁-C₄-alkyl, branched C₃-C₄-alkyl and/or C₃-C₇-cycloalkyl, with the provision that when one of R¹ or R² is C₃-C₇-cycloalkyl the other is H or a C₁-C₂ alkyl group, wherein said alkyl or cycloalkyl groups are optionally substituted by at least one fluorine atom, or
R¹ and R² directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
R³ is selected from the group comprising H, F, CN, perfluorinated linear C₁-C₄-alkyl and/or perfluorinated branched C₃-C₄-alkyl;
R⁴, R⁵ are selected, the same or independently of the other, from the group comprising perfluorinated linear C₁-C₄-alkyl and/or perfluorinated branched C₃-C₄-alkyl, and
wherein the electrolyte solvent comprises the fluorinated carbamate in an amount in the range from > 80 wt% to ≤ 100 wt%, referring to a total amount of the electrolyte solvent of 100 wt%, and wherein the electrolyte salt is selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts.

2. The electrolyte solution according to claim 1, wherein R³ is selected from the group comprising H, F and/or perfluorinated linear C₁-C₃-alkyl, preferably R³ is selected from the group comprising H, F, CF₃ and/or C₂F₅.

3. The electrolyte solution according to claim 1 or 2, wherein R⁴ and R⁵ are the same or independently of the other perfluorinated linear C₁-C₃-alkyl, preferably selected from the group comprising CF₃ and/or C₂F₅.

4. The electrolyte solution according to any of the preceding claims, wherein R¹ and R² are selected, the same or independently of the other, from the group comprising linear or branched C₁-C₃-alkyl, preferably selected from the group comprising methyl and/or ethyl.

5. The electrolyte solution according to any of the preceding claims, wherein the fluorinated carbamate is selected from the group comprising 1,1,1,3,3,3-hexafluoropropan-2-yl dimethylcarbamate, 1,1,1,3,3,3-hexafluoropropan-2-yl diethylcarbamate, and mixtures thereof.

6. The electrolyte solution according to any of the preceding claims, wherein the electrolyte solution comprises the fluorinated carbamate in a range from ≥ 85 wt% to ≤ 100 wt%, preferably in a range of ≥ 90 wt% to ≤ 100 wt%, more preferably in a range of ≥ 95 wt% to ≤ 100 wt%, referring to a total amount of the electrolyte solvent of 100 wt%.

7. The electrolyte solution according to any of the preceding claims, wherein the electrolyte solution comprises at least one non-fluorinated organic carbonate selected from the group comprising ethylene carbonate, ethyl methyl carbonate, propylene carbonate, dimethyl carbonate, diethyl carbonate, and mixtures thereof.

8. The electrolyte solution according to any of the preceding claims, wherein the alkali or alkaline earth metal sulfonimide or sulfonate salt is a lithium salt selected from the group comprising lithium bis(trifluoromethanesulfonyl)imide, lithium bis(fluorosulfonyl)imide, lithium (trifluoromethylsulfonyl)(nonafluorobutanesulfonyl)imide, lithium (fluorosulfonyl)(nonafluorobutanesulfonyl)imide, lithium (nonafluoro butan-2-one sulfonyl)(trifluoromethylsulfonyl)imide, lithium (nonafluoro butan-2-one sulfonyl)(fluorosulfonyl)imide and/or lithium trifluoromethanesulfonate.

9. An alkali or alkaline earth metal-based or an Al-based or Zn-based electrochemical energy storage device, particularly a lithium battery, a primary or secondary lithium-ion battery, a lithium polymer battery or a lithium-ion capacitor, comprising an electrolyte solution according to any of the preceding claims.

10. A method for preventing aluminum current collector corrosion in an alkali or alkaline earth metal-based or an Al-based or Zn-based electrochemical energy storage device containing an electrolyte solution comprising an electrolyte salt and an electrolyte solvent, the method comprising the step of using an electrolyte solvent comprising in a range from ≥ 80 wt% to ≤ 100 wt%, referring to a total amount of the electrolyte solvent of 100 wt%, of at least one fluorinated carbamate according to the general formula (1) R¹R²NC(O)OCR³R⁴R⁵ wherein:
R¹, R² are selected, the same or independently of the other, from the group comprising H, linear C₁-C₄-alkyl, branched C₃-C₄-alkyl and/or C₃-C₇-cycloalkyl, with the provision that when one of R¹ or R² is C₃-C₇-cycloalkyl the other is H or a C₁-C₂ alkyl group, wherein said alkyl or cycloalkyl groups are optionally substituted by at least one fluorine atom, or
R¹ and R² directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
R³ is selected from the group comprising H, F, CN, perfluorinated linear C₁-C₄-alkyl and/or perfluorinated branched C₃-C₄-alkyl;
R⁴, R⁵ are selected, the same or independently of the other, from the group comprising perfluorinated linear C₁-C₄-alkyl and/or perfluorinated branched C₃-C₄-alkyl, and
wherein the electrolyte salt is selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts.

11. The method according to claim 10, wherein R³ is selected from the group comprising H, F and/or perfluorinated linear C₁-C₃-alkyl, preferably R³ is selected from the group comprising H, F, CF₃ and/or C₂F₅.

12. The method according to claims 10 or 11, wherein R⁴ and R⁵ are the same or independently of the other perfluorinated linear C₁-C₃-alkyl, preferably selected from the group comprising CF₃ and/or C₂F₅.

13. The method according to any of the preceding claims, wherein the fluorinated carbamate is selected from the group comprising 1,1,1,3,3,3-hexafluoropropan-2-yl dimethylcarbamate, 1,1,1,3,3,3-hexafluoropropan-2-yl diethylcarbamate, and mixtures thereof.

14. The method according to any of the preceding claims, wherein the electrolyte solution comprises the fluorinated carbamate in a range from ≥ 85 wt% to ≤ 100 wt%, preferably in a range of ≥ 90 wt% to ≤ 100 wt%, more preferably in a range of ≥ 95 wt% to ≤ 100 wt%, referring to a total amount of the electrolyte solvent of 100 wt%.

15. Use of a fluorinated carbamate according to the general formula (1) R¹R²NC(O)OCR³R⁴R⁵ wherein:
R¹, R² are selected, the same or independently of the other, from the group comprising H, linear C₁-C₄-alkyl, branched C₃-C₄-alkyl and/or C₃-C₇-cycloalkyl, with the provision that when one of R¹ or R² is C₃-C₇-cycloalkyl the other is H or a C₁-C₂ alkyl group, wherein said alkyl or cycloalkyl groups are optionally substituted by at least one fluorine atom, or
R¹ and R² directly or via one or more additional nitrogen and/or oxygen atoms are linked to form together with the nitrogen atom to which they are attached a 3- to 7-membered non aromatic heterocycle, wherein the additional nitrogen atoms present in the ring being saturated with C₁-C₃-alkyl and the ring carbon atoms being optionally substituted with C₁-C₃-alkyl, wherein said heterocycle or C₁-C₃-alkyl groups are optionally substituted by at least one fluorine atom;
R³ is selected from the group comprising H, F, CN, perfluorinated linear C₁-C₄-alkyl and/or perfluorinated branched C₃-C₄-alkyl;
R⁴, R⁵ are selected, the same or independently of the other, from the group comprising perfluorinated linear C₁-C₄-alkyl and/or perfluorinated branched C₃-C₄-alkyl,
for the prevention of aluminum current collector corrosion in an alkali or alkaline earth metal-based or an Al-based or Zn-based electrochemical energy storage device, containing an electrolyte solution comprising an electrolyte salt selected from the group comprising alkali or alkaline earth metal, Al or Zn sulfonimide, methide, sulfonate or oxalatoborate salts, or alkali or alkaline earth metal, Al or Zn salts of -CF₃ and -CN-substituted Hückel-anions, secondary carbanions substituted by (CF₃SO₂)₂CH⁻, tertiary carbanions substituted by (CF₃SO₂)₃C⁻, (N≡C)₃C⁻ or (FSO₂)₃C⁻, pentacyano cyclopentadienyl, arylsulfonyl, trifluoromethane sulfonyl amide anions, SO₃⁻-end-capped or sulfonamide end-capped polyethylene glycol, and mixtures of these salts, and an electrolyte solvent, wherein the fluorinated carbamate is used in an amount in the range from ≥ 80 wt% to ≤ 100 wt%, referring to a total amount of the electrolyte solvent of 100 wt%.
